# EUROPEAN PATENT APPLICATION

(11) **EP 3 211 927 A1**
(43) Date of publication of application: **30.08.2017**
(21) Application number: 15861348.9
(22) Date of filing: 07.05.2015
(51) Int. Cl.: H04W 8/00

(54) **EARLY WARNING METHOD AND SYSTEM, AND COMPUTER STORAGE MEDIUM**

(30) Priority: 21.11.2014 CN 201410677511
(71) Applicant: ZTE Corporation, Shenzhen, Guangdong 518057 (CN)
(72) Inventor: DU, Ting, Shenzhen Guangdong 518057 (CN); XU, Hui, Shenzhen Guangdong 518057 (CN); MA, Zijiang, Shenzhen Guangdong 518057 (CN); WANG, Yaying, Shenzhen Guangdong 518057 (CN)
(74) Representative: Brevalex
(86) International application number: PCT/CN2015/078455
(87) International publication number: WO 2016/078356

(57) **Abstract**

Disclosed are an early warning method and system, and a computer storage medium. According to the method, a link between a base station and a user terminal served by the base station is measured (101 a). It is determined whether to trigger to send early warning information based on at least obtained measurement information (102a), the early warning information representing that the user terminal deviates from a safe communication region, and the safe communication region being a region in which link quality exceeds a preset link quality threshold.

## Description

### TECHNICAL FIELD

The disclosure relates to a communication technology and in particular to an early warning method and system, and a computer storage medium.

### BACKGROUND

At present, a cluster communication system is developed for meeting requirements of industrial user terminals on command and dispatch. The system is a dedicated wireless communication system facing specific industrial applications. In addition to providing a two-way communication function for a mobile phone, the main features of the cluster communication system differing from a public wireless mobile communication system include that the cluster communication system can also provide intra-system group calling and general calling. Even, the cluster communication system can support the establishment of call priority, and perform communications that the common mobile phone cannot perform, such as, priority call and emergency call. The cluster communication system can also provide dynamic regrouping, intra-system virtual private network and other special functions. These functions are especially suitable for dedicated communication of the national police department and the state security department, and command and dispatch for airport, customs, public transportation and emergency and disaster releasing. Accordingly, the cluster communication system is widely used in government departments, public security, emergency communication, electric power, civil aviation, petrochemical industry, army, enterprises and so on. The cluster communication system is a multipurpose and efficient wireless communication system, and forms a private communication network independent of the public mobile communication network all over the world.

With the increasing shortage of spectrum resources, a demand for a public network cluster is growing. The public network cluster refers to a specific cluster communication service developed based on the existing public mobile communication network.

In order to ensure the capability of a user terminal in a cluster that can keep calling when performing a key service, the 3GPP puts forward a demand for an Isolated Evolved Universal Terrestrial Radio Access Network (E-UTRAN) Operation for Public Safety (IOPS) mode. The IOPS mode is a capability of the base station that can still provide a reliable and safe communication with a certain level for the user terminal in the cluster when a backhaul link cannot transmit signaling and data normally because of being interrupted or failed. The base station herein can be a Nomadic (N) evolved NodeB (eNB) or eNB.

Because the IOPS mode is composed of one or more NeNBs or eNBs connected, and there is not a backhaul link or the bandwidth of the backhaul link is limited, the coverage range of the NeNB or eNB under the mode is quite limited. Once a user terminal deviates from a coverage region, namely a safe communication region, the communication is bound to be interrupted. Especially, when the user terminal is a group calling initiator or a dispatcher, the communication of the whole group will be interrupted, which seriously influences the stability of cluster communication. In the relevant art, an effective solution has not been presented for how to avoid communication interruption under the IPOS mode, and ensure the stability of communication of the user terminal.

### SUMMARY

The disclosure provides an early warning method and system, and a computer storage medium, which can avoid communication interruption and ensure the stability of communication of the user terminal.

The technical solutions of the disclosure are implemented as follows.

An early warning method is provided. A link between a base station and a user terminal served by the base station is measured. It is determined whether to trigger to send early warning information based on at least obtained measurement information. The early warning information is configured to represent that the user terminal deviates from a safe communication region. The safe communication region is a region in which link quality exceeds a preset link quality threshold.

An early warning method is provided, which is applied to a base station. The base station receives measurement information sent by the user terminal served by the base station. The measurement information is obtained by the user terminal measuring the link between the user terminal and the base station. It is determined whether to send the early warning information to the user terminal based on at least the obtained measurement information. The early warning information is configured to represent that the user terminal deviates from the safe communication region. The safe communication region is a region in which link quality exceeds the preset link quality threshold.

An early warning method is provided, which is applied to a user terminal. The user terminal receives the measurement information sent by the base station serving the user terminal. The measurement information is obtained by the base station measuring the link between the base station and the user terminal. It is determined whether to trigger to send the early warning information based on the obtained measurement information. The early warning information is configured to represent that the user terminal deviates from the safe communication region. The safe communication region is a region in which link quality exceeds the preset link quality threshold.

An early warning system is provided including an early warning unit to send the early warning information, a measuring unit to measure the link between the base station and the user terminal served by the base station, and output the measurement information, and a determining unit to determine whether to trigger the early warning unit to send the early warning information based on at least the measurement information. The early warning information is configured to represent that the user terminal deviates from the safe communication region. The safe communication region is a region in which link quality exceeds the preset link quality threshold.

A computer storage medium is also provided having executable instructions stored therein. The executable instructions are configured to perform any early warning method above stated.

In the disclosure, it is determined whether to send the early warning information according to the measurement information. When the early warning information is sent, it is possible to prompt the user terminal deviating from the safe communication region to adjust the location, thereby preventing the user terminal from deviating the safe communication region in an IOPS communication scenario, avoiding communication interruption and ensuring the stability of communication.

### BRIEF DESCRIPTION OF THE DRAWINGS

Fig. 1a to Fig. 1c are flowcharts showing an early warning method in an embodiment of the disclosure.
Fig. 2a to Fig. 2b are structure diagrams illustrating an early warning system in an embodiment of the disclosure.
Fig. 2c to Fig. 2e are schematic diagrams illustrating setting of an early warning system in an embodiment of the disclosure.
Fig. 3 is a schematic diagram illustrating an IOPS scenario in an embodiment of the disclosure.
Fig. 4 is a flowchart showing that a user terminal A starts measurement in an embodiment of the disclosure.
Fig. 5 is a schematic diagram illustrating that a user terminal A moves to the edge of a safe communication region in an embodiment of the disclosure.
Fig. 6 is a schematic diagram illustrating that a user terminal A sends a measurement report to an NeNB or eNB in an embodiment of the disclosure.
Fig. 7 is a schematic diagram illustrating that an NeNB or eNB sends early warning information to a user terminal A in an embodiment of the disclosure.
Fig. 8 is a flowchart of sending early warning information in an embodiment of the disclosure.
Fig. 9 is a flowchart showing that a user terminal A sends early warning information in an embodiment of the disclosure.
Fig. 10 is a schematic diagram illustrating that a user terminal A sends Message Accept One to an NeNB or eNB in an embodiment of the disclosure.
Fig. 11 is a schematic diagram illustrating that a user terminal A sends Message Accept Two to an NeNB or eNB in an embodiment of the disclosure.
Fig. 12 is a flowchart showing that a user terminal A processes early warning information in an embodiment of the disclosure.
Fig. 13 is a schematic diagram illustrating that a user terminal A moves to the edge of a safe communication region in an embodiment of the disclosure.
Fig. 14 is a flowchart showing that a user terminal sends early warning information in an embodiment of the disclosure.
Fig. 15 is a schematic diagram illustrating that a user terminal A sends Message Accept One to an NeNB or eNB in an embodiment of the disclosure.
Fig. 16 is a schematic diagram illustrating that a user terminal A sends Message Accept Two to an NeNB or eNB in an embodiment of the disclosure.
Fig. 17 is a flowchart showing that a user terminal A processes early warning information in an embodiment of the disclosure.
Fig. 18 is a schematic diagram illustrating that an NeNB or eNB sends early warning information to a user terminal A in an embodiment of the disclosure.
Fig. 19 is a flowchart showing that a user terminal A sends early warning information in an embodiment of the disclosure.
Fig. 20 is a schematic diagram illustrating that a user terminal A sends early warning information in an embodiment of the disclosure.
Fig. 21 is a schematic diagram illustrating that a user terminal A sends Message Accept One to an NeNB or eNB in an embodiment of the disclosure.
Fig. 22 is a schematic diagram illustrating that a user terminal A sends Message Accept Two to an NeNB or eNB in an embodiment of the disclosure.
Fig. 23 is a flowchart showing that a user terminal A processes early warning information in an embodiment of the disclosure.

### DETAILED DESCRIPTION

In order to make the aim, the technical solutions and the advantages of the disclosure clearer, the disclosure is further elaborated below in combination with the accompanying drawings and specific embodiments. It should be understood that the specific embodiments described herein are only used for illustrating, rather than limiting, the disclosure. With the increasing shortage of spectrum resources, a demand for a public network cluster is growing. The public network cluster refers to a specific cluster communication service developed based on the existing public mobile communication network.

In order to ensure the capability of a cluster user terminal that can keep calling when performing a key service, the 3GPP puts forward a demand for an IOPS mode. The IOPS mode is a mode in which a reliable and safe communication with a certain level can still be provided for user terminals in the cluster when a backhaul link between a NeNB or eNB and a core network cannot transmit signaling and data normally because of interruption or failure.

In the IOPS mode, one or more connected NeNBs or eNBs take charge of providing services for user terminals, and there is not a backhaul link or the bandwidth of the backhaul link is limited. Thus, the coverage range of the NeNB or eNB under the scenario is quite limited. Once a user terminal deviates from a coverage region of the NeNB or eNB, namely a safe communication region, the communication is bound to be interrupted. Especially, when the user terminal is a group calling initiator or a dispatcher, the communication of the whole group will be interrupted, which seriously influences the stability of cluster communication. In the relevant art, an effective solution has not been presented for how to avoid communication interruption under the scenario and ensure the stability of communication of the user terminal.

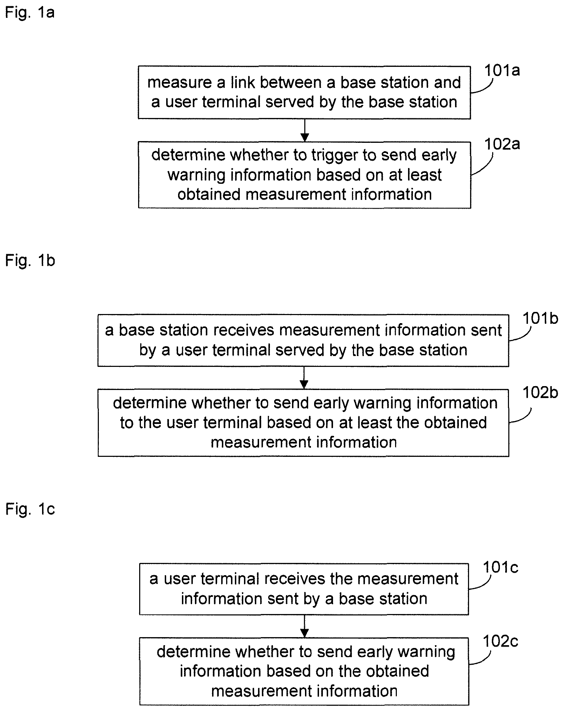

An embodiment of the disclosure provides an early warning method, which can be applied to the following scenario. When the backhaul link between the base station (e.g. the eNB or the NeNB) and a core network device is disconnected or the bandwidth of the backhaul link is limited, only one or more than one base station connected provides services to the user terminal. It is noted that, for a scenario where the backhaul link between the base station (e.g. the eNB or the NeNB) and the core network device works normally, the technical solution recorded in the embodiment of the disclosure is still applicable. As shown in Fig. 1a, in Step 101a, a link between the base station and the user terminal served by the base station is measured. In Step 102a, based on at least the obtained measurement information, it is determined whether to trigger to send early warning information. The early warning information is configured to represent that the user terminal deviates from the safe communication region. The safe communication region is a region in which link quality exceeds a preset link quality threshold. All steps from Step 101 a to Step 102a can be completed at the base station side or at the user terminal side. Alternatively, all the steps can be completed in a device (system) independent of the base station side and the user terminal side.

As an example, measurement information includes at least one of the following information: Reference Signal Receiving Power (RSRP) of an uplink, Reference Signal Receiving Quality (RSRQ) of the uplink, RSRP of a downlink and RSRQ of the downlink.

As an example, the operation that it is determined whether to trigger to send the early warning information based on at least the obtained measurement information includes that the obtained measurement information is compared with a corresponding measurement information threshold value. When the obtained measurement information is less than the corresponding measurement information threshold value, it is determined to trigger to send the early warning information. When the obtained measurement information is not less than the corresponding measurement information threshold value, it is determined to not trigger to send the early warning information.

As an example, when it is determined to trigger to send the early warning information, the location of the user terminal can also be detected. It is determined whether the user terminal continues deviating from the safe communication region according to the location of the user terminal. If the user terminal continues deviating from the safe communication region, first information is sent. The first information is used for indicating that the user terminal deviates from the safe communication region. If the user terminal does not continue deviating from the safe communication region, second information is sent. The second information is used for indicating that the user terminal moves to the safe communication region. The processing of detecting the location of the user terminal and sending the first information or the second information recorded in the example can be completed at the base station side or the user terminal side. Alternatively, the processing can be completed in the device (system) independent of the base station side and the user terminal side. For example, when the processing is completed at the user terminal side (or the device independent of the base station side and the user terminal side), the first or second information may be sent to the base station. When the base station receives the first information, the base station may no longer schedule resources for the user terminal. When the base station receives the second information, the base station continues scheduling resources for the user terminal.

When it is determined that, according to the location of the user terminal, the user terminal stops deviating from the safe communication region, the early warning information may be no longer sent, so that the situation of keeping sending the early warning information may be avoided.

An embodiment of the disclosure also provides an early warning method, which may be applied to the base station. For example, it may be applied to the following scenario. The backhaul link between the base station and the core network is disconnected, or the bandwidth of the backhaul link between the base station and the core network is limited. It is noted that, for the scenario where the backhaul link between the base station (e.g. the eNB or the NeNB) and the core network device works normally, the technical solution recorded in the embodiment of the disclosure is still applicable.

As shown in Fig. 1b, the method recorded in the present embodiment includes the following steps.

At Step 101 b, the base station receives the measurement information sent by the user terminal served by the base station. The measurement information is obtained by measuring the link between the user terminal and the base station by the user terminal.

The link includes an uplink and a downlink. Correspondingly, the measurement information may include at least one of the RSQP of the uplink, the RSRQ of the uplink, the RSRP of the downlink and the RSRQ of the downlink.

At Step 102b, based on at least the obtained measurement information, it is determined whether to send the early warning information to the user terminal.

The early warning information is used for representing that the user terminal deviates from the safe communication region. The safe communication region is the region in which link quality exceeds the preset link quality threshold. The link quality may be represented by the RSRP and/or the RSRQ.

In practice, determining can be performed with reference to the measurement information and whether the work state information, such as capacity information, of the base station is enough to provide services for the user terminal.

As an example, the operation that it is determined whether to trigger to send the early warning information based on at least the obtained measurement information includes that the obtained measurement information is compared with the measurement information threshold value. When the obtained measurement information is less than the measurement information threshold value, it is determined that the early warning information is sent to the user terminal. When the obtained measurement information is not less than the measurement information threshold value,, it is determined that the early warning information is not sent to the user terminal.

As an example, when the sending of the early warning information is triggered, the location of the user terminal may be obtained (the location of the user terminal may be reported to the base station by the terminal according to GPS positioning, or obtained by the base station adopting a positioning technology). It is determined, according to the location of the user terminal, whether the user terminal continues deviating from the safe communication region. If the user terminal continues deviating from the safe communication region, the first information may be sent to the user terminal. The first information is used for indicating that the user terminal deviates from the safe communication region and stopping scheduling resources for the user terminal. If the user terminal does not continue deviating from the safe communication region,, the second information is sent. The second information is used for indicating that the user terminal moves to the safe communication region and continuing scheduling resources for the user terminal.

As an example, the measurement information is information that satisfies the condition of being reported to the base station in all the measurement information obtained by the user terminal. Thereby, the user terminal is prevented from frequently reporting the measurement information to the base station.

An embodiment of the disclosure also provides an early warning method which may be applied to the user terminal. The early warning method may be applied to the following scenario. The backhaul link between the base station of the user terminal and the core network is disconnected, or the bandwidth of the backhaul link between the base station and the core network is limited. It is noted that, for a scenario where the backhaul link between the base station (e.g. the eNB or the NeNB) and the core network device works normally, the technical solution recorded in the embodiment of the disclosure is still applicable.

As shown in Fig. 1c, the early warning method recorded in the present embodiment includes the following steps.

At Step 101c, the user terminal receives the measurement information sent by the base station (serving the user terminal). The measurement information is obtained by the base station measuring the link between the base station and the user terminal.

The link includes the uplink and the downlink. Correspondingly, the measurement information may include at least one of the RSQP of the uplink, the RSRQ of the uplink, the RSRP of the downlink and the RSRQ of the downlink.

At Step 102c, based on the obtained measurement information, it is determined whether to send the early warning information. The early warning information is used for representing that the user terminal deviates from the safe communication region. The safe communication region is the region in which link quality exceeds the preset link quality threshold.

As an example, the operation that it is determined whether to send the early warning information based on at least the obtained measurement information includes that the obtained measurement information is compared with the measurement information threshold value. When the obtained measurement information is less than the corresponding measurement information threshold value, it is determined that the early warning information is sent. When the obtained measurement information is not less than the corresponding measurement information threshold value, it is determined that the early warning information is not sent.

As an example, when the user terminal triggers the sending of the early warning information, it is also possible to detect the location of the user terminal (the user terminal can adopt the GPS positioning technology to determine its location). It is determined, according to the location of the user terminal, whether the user terminal continues deviating from the safe communication region. If the user terminal continues deviating from the safe communication region, the first information is sent to the base station. The first information is used for indicating that the user terminal deviates from the safe communication region, and the base station may stop scheduling resources for the user terminal upon receipt of the first information. If the user terminal does not continue deviating from the safe communication region, the second information is sent to the base station. The second information is used for indicating that the user terminal moves to the safe communication region, so that the base station continues scheduling resources for the user terminal.

When it is determined that, according to the location of the user terminal, the user terminal stops deviating from the safe communication region, it is possible to stop sending the early warning information, so that it is avoided to continue sending the early warning information.

An embodiment of the disclosure also provides a computer readable medium, in which executable instructions are stored. The executable instructions are used for triggering to perform the early warning method shown in any one of Fig. 1 a to Fig. 1 c.

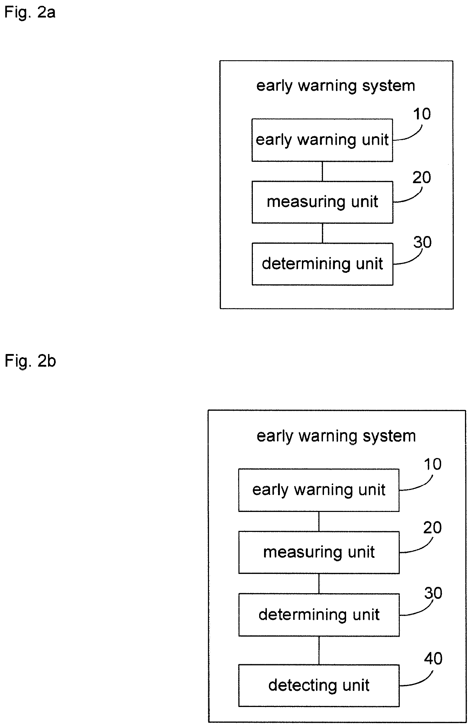

An embodiment of the disclosure also provides an early warning system. As shown in Fig. 2a, the system includes an early warning unit 10, a measuring unit 20 and a determining unit 30.

The early warning unit 10 is configured to send the early warning information.

The measuring unit 20 is configured to measure the link between the base station and the user terminal served by the base station, and output the measurement information. For example, the measuring unit can measure the link to output the measurement information when the backhaul link between the base station and the core network is disconnected, or the bandwidth of the backhaul link between the base station and the core network is limited. Certainly, for the scenario where the backhaul link between the base station (e.g. the eNB or the NeNB) and the core network device works normally, the measuring unit can also measure the link to output the measurement information.

The determining unit 30 is configured to, based on at least the measurement information, determine whether to trigger the early warning unit 10 to send the early warning information. The early warning information is used for representing that the user terminal deviates from the safe communication region. The safe communication region is the region in which link quality exceeds the preset link quality threshold.

As an example, the measurement information includes at least one of the RSRP of the uplink, the RSRQ of the uplink, the RSRP of the downlink and the RSRQ of the downlink.

As an example, the determining unit 30 is further configured to compare the obtained measurement information with the corresponding measurement information threshold value. When the obtained measurement information is determined to be less than the corresponding measurement information threshold value, the early warning information is determined to be triggered to send. When the obtained measurement information is determined to be not less than the corresponding measurement information threshold value, the determining unit 30 determines to not trigger to send the early warning information.

As an example, as shown in Fig. 2b, the system further includes a detecting unit 40 configured to detect the location of the user terminal when the determining unit 30 determines that the early warning information is sent.

The detecting unit 40 is configured to determine whether the user terminal continues deviating from the safe communication region according to the location of the user terminal. If the user terminal continues deviating from the safe communication region, the detecting unit 40 sends the first information which is used for indicating that the user terminal deviates from the safe communication region. If the user terminal does not continue deviating from the safe communication region,, the detecting unit 40 sends the second information which is used for indicating that the user terminal moves to the safe communication region.

As an example, the measuring unit 20 is further configured to output the measurement information that satisfies the condition of being reported to the base station in all the measurement information obtained by measuring, so as to avoid the situation that the measurement information is reported frequently.

It is noted that, the units in the early warning system may be set in the base station or the user terminal, or distributed in the base station and the user terminal. The units may also be set in the device (system) independent of the base station and the user terminal, so that different early warning modes can be realized. Different settings of the respective units are elaborated below.

In a first scenario, the user terminal measures information and feeds back the information to the base station, and then the base station determines whether to send the early warning information to the user terminal. When it is needed, the early warning information is sent to the user terminal, so as to prompt the user terminal to stay in the safe communication region.

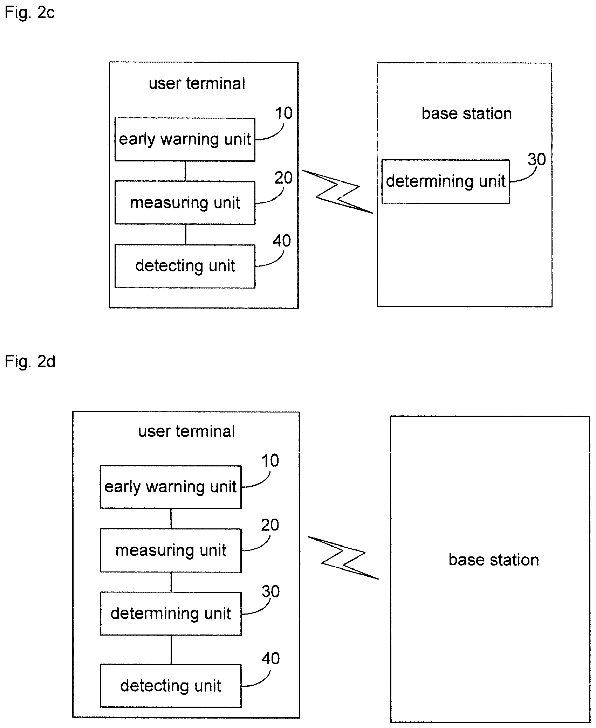

As shown in Fig. 2c, the early warning unit 10, the measuring unit 20 and the detecting unit 40 are set in the user terminal. The determining unit 30 is set in the base station. When the user terminal detects that it deviates from the safe communication region (which may be realized by the detecting unit 40 adopting the GPS positioning, and the detecting unit 40 may be realized by a GPS antenna and a GPS integrated circuit chip), the user terminal measures the link between the user terminal and the base station (which is completed by the measuring unit 20; the measuring unit 20 may be realized by a processor and a receiver in the user terminal; the processor analyzes a downlink signal received by the receiver in the user terminal to obtain the measurement information), and sends the obtained measurement information to the base station. The base station determines whether to send the early warning information to the user terminal (which is realized by the determining unit 30; the determining unit 30 may be realized by the processor in the base station). If necessary, the base station sends (through a transmitter in the base station) the early warning information to the user terminal, so as to prompt the user to stay in the safe communication region. The user terminal sends the early warning information (which is realized by the early warning unit 10). The early warning unit 10 can be at least one of the vibrator, the speaker and the display screen in the user terminal, so that the early warning information is sent by means of vibration, sound alert and image. After sending the early warning information, if the user terminal detects that it continues deviating from the safe communication region (which may be realized by the detecting unit 40 adopting the GPS positioning), the user terminal sends the first information to the base station to indicate that it will deviate from the safe communication region, which can trigger the base station to stop scheduling resources for the user terminal. If the user terminal detects that it does not deviate from the safe communication region (which may be realized by the detecting unit 40 adopting the GPS positioning), the user terminal sends the second information to the base station to indicate that it will move to the safe communication region, which can trigger the base station to continue scheduling resources for the user terminal.

In a second scenario, the user terminal measures by itself and determines whether to send the early warning information according to the information obtained by measuring, so as to prompt the user holding the user terminal to stay in the safe communication region.

As shown in Fig. 2d, all the units in the early warning system are set in the user terminal. When the user terminal detects that it deviates from the safe communication region (which may be realized by the detecting unit 40 adopting the GPS positioning, and the detecting unit 40 may be realized by the GPS antenna and the GPS integrated circuit chip), the user terminal measures the link between the user terminal and the base station (which is completed by the measuring unit 20; the measuring unit 20 may be realized by the processor and the receiver in the user terminal; the processor analyzes the downlink signal received by the receiver in the user terminal to obtain the measurement information), and determines whether to send the early warning information according to the obtained measurement information (which is realized by the determining unit 30). If necessary, the early warning information is sent (by the early warning unit 10). The early warning unit 10 may be at least one of the vibrator, the speaker and the display screen in the user terminal, so that the early warning information is sent by means of vibration, sound alert and image. After sending the early warning information, if the user terminal detects that it continues deviating from the safe communication region (which may be realized by the detecting unit 40 adopting the GPS positioning), the user terminal sends the first information to the base station to indicate that it will deviate from the safe communication region, which can trigger the base station to stop scheduling resources for the user terminal. If the user terminal detects that it does not deviate from the safe communication region (which can be realized by the detecting unit 40 adopting the GPS positioning), the user terminal sends the second information to the base station to indicate that it will move to the safe communication region, which can trigger the base station to continue scheduling resources for the user terminal.

In a third scenario, the base station measures information and feeds back the information to the user terminal, and then the user terminal determines whether to send the early warning information. If necessary, the early warning information is sent to the user terminal, so as to prompt the user to stay in the safe communication region.

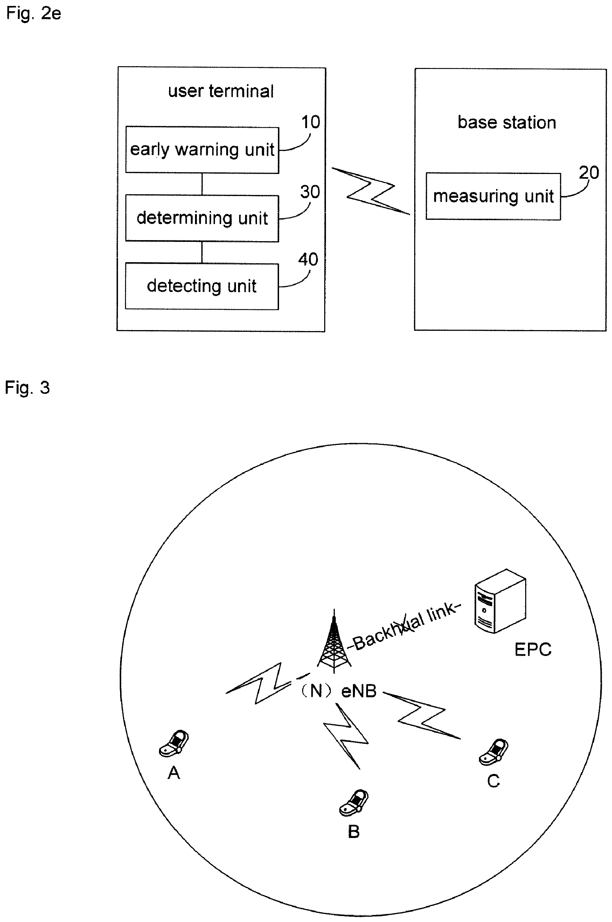

As shown in Fig. 2e, the early warning unit 10, the determining unit 30 and the detecting unit 40 are set in the user terminal. The measuring unit 20 is set in the base station. The base station measures the link between the base station and the user terminal (which is realized by the measuring unit 20; the measuring unit 20 may be realized by the processor and the receiver in the base station; the processor analyzes an uplink signal received by the receiver in the base station to obtain the measurement information), and sends the obtained measurement information to the user terminal (through the transmitter in the base station). The user terminal determines whether to send the early warning information (through the determining unit 30). If necessary, the early warning information is sent (by the early warning unit 10). The early warning unit 10 may be at least one of the vibrator, the speaker and the display screen in the user terminal, so that the early warning information is sent by means of vibration, sound alert and image. After sending the early warning information, if the user terminal detects that it continues deviating from the safe communication region (which may be realized by the detecting unit 40 adopting the GPS positioning), the user terminal sends the first information to the base station to indicate that it will deviate from the safe communication region, which may trigger the base station to stop scheduling resources for the user terminal. If the user terminal detects that it does not deviate from the safe communication region (which may be realized by the detecting unit 40 adopting the GPS positioning), the user terminal sends the second information to the base station to indicate that it will move to the safe communication region, which may trigger the base station to continue scheduling resources for the user terminal.

The abovementioned methods and systems are elaborated below with respect to the processing of the following scenarios in practice.

### Description of scenario

IOPS requires that the user terminal can still carry out communication when the network side (the core network) fails (e.g. the system facility is broken due to earthquake, fire disaster and others), which requires a wireless broadband access system to have a higher fault-tolerance processing capacity and redundancy backup capacity and requires the user terminal to have a stronger function to offer support. For example, when a disaster occurs, an Evolved Packet Core (EPC) device is broken, there is not a backhaul link between the NeNB and the EPC device or there is a backhaul link with limited bandwidth, and the IOPS composed of a single NeNB or eNB is adopted to provide local services to keep the specific group communication. As shown in Fig. 3, the NeNB or eNB serves the user terminals A, B and C, and the user terminals A, B and C belong to the same group. When the user terminal A deviates from the safe communication region, the safe communication region being the region where the user terminal can obtain continuous services of the NeNB or eNB, the NeNB or eNB can determine whether to send the early warning information to the user terminal A according to the information obtained by measuring in real time. Alternatively, the user terminal determines whether to send the early warning information according to the information obtained by the user terminal measuring, so as to make the user holding the user terminal return to the safe communication region, and avoid the situation influencing the communication quality such as call drop.

The above processing may include the following several implementation modes.

In Mode One, the user terminal measures information and feeds back the information to the NeNB or eNB. The NeNB or eNB determines whether to send the early warning information to the user terminal. If necessary, the early warning information is sent to the user terminal, so as to prompt the user terminal to stay in the safe communication region.

In Mode Two, the user terminal measures by itself and determines whether to send the early warning information according to the information obtained by measuring, so as to prompt the user holding the user terminal to stay in the safe communication region.

In Mode Three, the NeNB or eNB measures information and feeds back the information to the user terminal, and then the user terminal determines whether to send the early warning information. If necessary, the early warning information is sent to the user terminal, so as to prompt the user to stay in the safe communication region.

The processing when the user terminal A deviates from the safe communication region in the above several implementation modes is elaborated below in combination with the specific processing steps. The processing when the user terminals B and C deviate from the safe communication region can refer to the following processing.

In Mode One, the user terminal measures information and feeds back the information to the NeNB or eNB. The NeNB or eNB determines whether to send the early warning information to the user terminal. If necessary, the early warning information is sent to the user terminal, so as to prompt the user terminal to stay in the safe communication region. The above is mainly realized by Step (1) to Step (5).
(1) The user terminal A starts measuring.

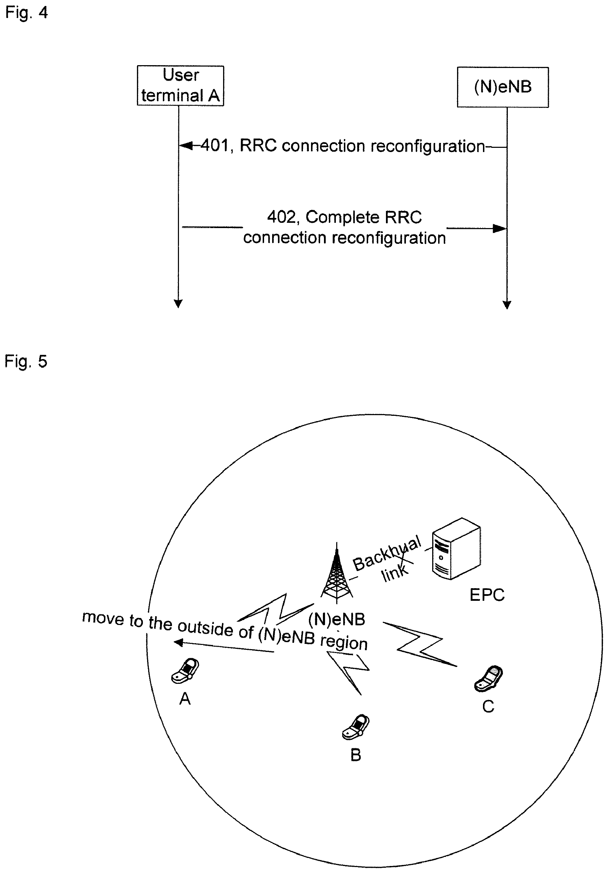

The implementation process of starting measuring is shown in Fig. 4. In Step 401, after the user terminal A completes an RRC connection, the NeNB or eNB informs a measurement configuration message to the user terminal A through a measConfig information element carried in an RRC Connection Reconfiguration Message, so as to indicate the information needing to be measured by the user terminal A. For example, the information needing to be measured can be indicated in a quantityConfig field of the measConfig information element.

In Step 402, the user terminal A performs measurement configuration at an RRC protocol end of the user terminal A according to the measurement configuration message issued by the NeNB or eNB, and sends an RRC Connection Reconfiguration Complete message to the NeNB or eNB to indicate that the measurement configuration is completed.

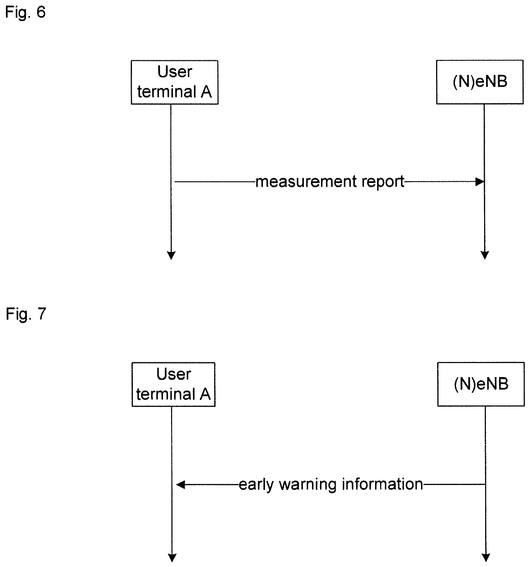

By Step 401 and Step 402, the user terminal A starts measuring. The objects of measuring include the RSRP and/or the RSRQ of the downlink.
(2) As shown in Fig. 5, the user terminal A starts moving to the edge of the safe communication region.
(3) As shown in Fig. 6, after completing the measurement, the user terminal A evaluates a reporting condition according to a measurement report configuration. For example, when a measurement result satisfies the reporting condition (e.g. the measurement value corresponding to one or two of the RSRP and the RSRQ of the downlink is less than the corresponding threshold value), the user terminal A fills the measurement result in a Measurement Report message and sends the Measurement Report message to the NeNB or eNB.
(4) As shown in Fig. 7, the NeNB or eNB determines whether it is needed to send a Message Warning to the user terminal A based on at least the Measurement Report message. If so, the NeNB or eNB sends the Message Warning to the user terminal A.

The NeNB or eNB may determine whether it is needed to send the early warning information to the user terminal A according to whether the measured information (the RSRP and/or the RSRQ of the downlink) is less than the corresponding threshold value. Certainly, the NeNB or eNB may also determine whether to send the early warning information according to its own state information (e.g. whether the capacity reaches a upper limit) and whether the measured information is less than the corresponding threshold. For example, when the capacity of the NeNB or eNB reaches the upper limit, it means that it cannot continue providing services for the user terminal A. If it is determined, according to the measurement report of the user terminal A, that the information (e.g. the RSRP and/or RSRQ) measured by the user terminal A is less than the corresponding threshold, the early warning information is not sent to the user terminal A. When the capacity of the NeNB or eNB does not reach the upper limit, it means that it can continue providing services for the user terminal A. If it is determined, according to the measurement report of the user terminal A, that the information (e.g. the RSRP and/or RSRQ) measured by the user terminal A is less than the corresponding threshold, it is needed to send the early warning information to the user terminal A.

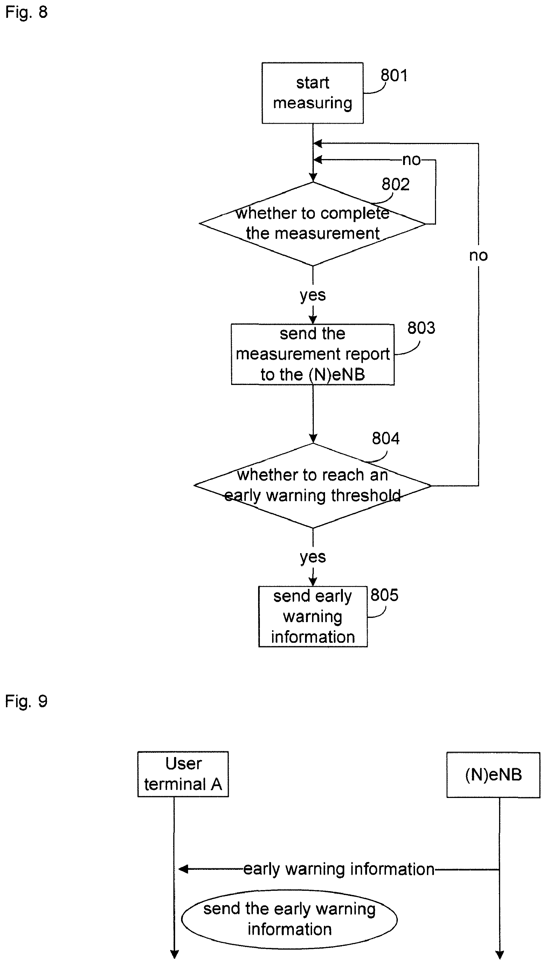

Fig. 8 is a flowchart of sending the early warning information in an embodiment of the disclosure, including the following steps.

At Step 801, the user terminal A starts measuring after receiving the measurement configuration message.

At Step 802, the user terminal A measures information and determines whether the measurement is completed. If the measurement is completed, Step 803 is performed. If the measurement is not completed, measurement is continued until the measurement is completed.

At Step 803, the user terminal A sends the measurement report to the NeNB or eNB.

After completing the measurement, the user terminal A evaluates the reporting condition according to the measurement report configuration. For example, when the measurement result satisfies a set condition (e.g. the measurement value corresponding to one or two of the RSRP and the RSRQ of the downlink is less than the corresponding threshold value), the user terminal A fills the measurement result in the Measurement Report message and sends the message to the NeNB or eNB.

At Step 804, based on at least the measurement report, the NeNB or eNB determines whether an early warning threshold is reached. If the early warning threshold is reached, Step 805 is performed, and the early warning information (Message Warning) is sent to the user terminal A. If the early warning threshold is not reached, it returns to Step 802 to continue measuring the information.

At Step 805, the NeNB or eNB sends the early warning information (Message Warning) to the user terminal A.
(5) The user terminal A sends the early warning information.

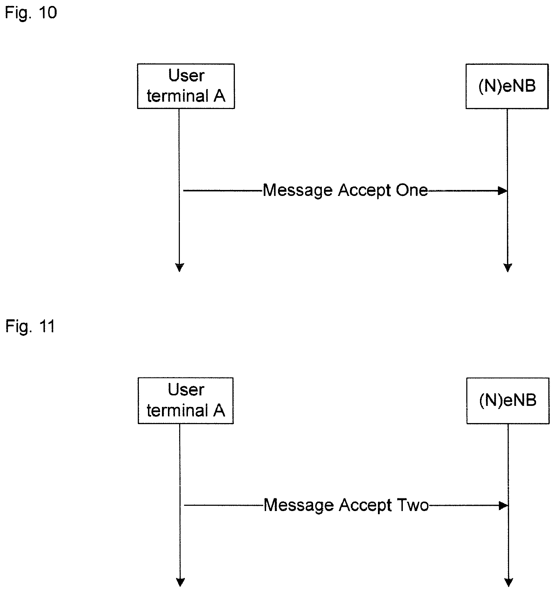

As shown in Fig. 9, the user terminal A sends early warning after receiving Message Warning, such as, vibrating or sending a voice alarm "you will leave the service region," and determines whether to move to the IOPS safe communication region. One situation is shown in Fig. 10. If the user does not accept the warning and presses the Leave key of the user terminal A to close the early warning, the user terminal A returns Message Accept One to the NeNB or eNB, so as to inform the NeNB or eNB that it will leave the coverage region (corresponding to the safe communication region) of the NeNB or eNB. Then, the NeNB or eNB will not schedule resources for the user terminal A anymore and stops serving the user terminal A. The other situation is shown in Fig. 11. If the user accepts the warning and presses the Back key of the user terminal A, the user terminal A returns Message Accept Two to inform the NeNB or eNB that it has received the alarm and will adjust the direction to move to the safe communication region (the location may be adjusted by adopting a GPS positioning service). The NeNB or eNB will continue scheduling resources for the user terminal A and keep serving. After returning to the safe communication region, the user terminal A can close the early warning when determining, according to the location, that it is in the safe communication region.

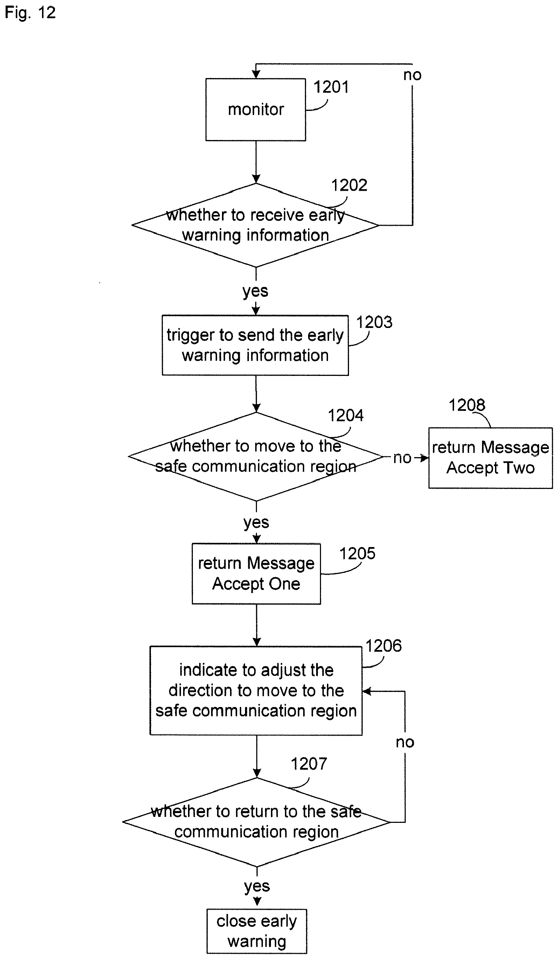

Fig. 12 is a flowchart showing that the user terminal A processes the early warning information, including the following steps.

At Step 1201, the early warning information is monitored.

At Step 1202, it is determined whether the early warning information is received. If the early warning information is received, Step 1203 is performed. If the early warning information is not received, it returns to Step 1201.

At Step 1203, the early warning information is sent.

The way of sending the early warning information can be vibrating or sending the voice alarm "you will leave the service region".

At Step 1204, it is determined whether to move to the safe communication region. If it is determined to move to the safe communication region, Step 1205 is performed. If it is determined to not move to the safe communication region, Step 1206 is performed.

At Step 1205, if the user accepts the warning and presses the Back key of the user terminal A, the user terminal A returns Message Accept Two to inform the NeNB or eNB that it has received the alarm. Step 1206 is performed.

At Step 1206, the user terminal A indicates the user to adjust the direction to move to the safe communication region.

At Step 1207, the user terminal A (which may adjust the location by adopting the GPS positioning service) determines whether to return to the safe communication region. If the user terminal A is determined to return to the safe communication region, the early warning is closed. That is, the sending of early warning information is stopped. If the user terminal A is determined to not return to the safe communication region, it returns to Step 1206.

At Step 1208, if the user does not accept the warning and presses the Leave key of the user terminal A to close the early warning, the user terminal A returns the Message Accept One to the NeNB or eNB, so as to inform the NeNB or eNB that it will leave the coverage region of the NeNB or eNB.

It is noted that, after receiving the early warning information, the user terminal A determines whether to move to the safe communication region while sending the early warning information.

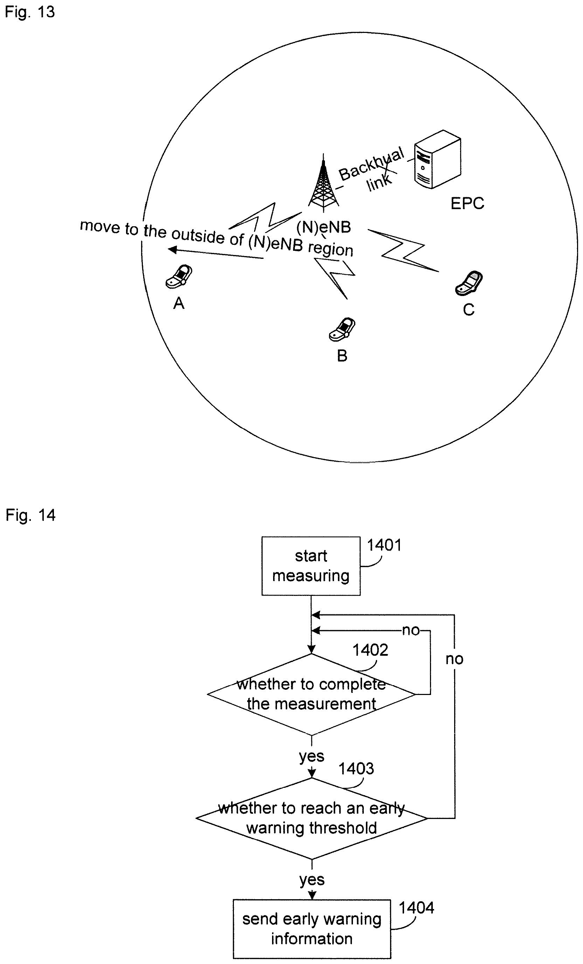

In Mode Two, the user terminal measures by itself and determines whether to send the early warning information according to the information obtained by measuring, so as to prompt the user holding the user terminal to stay in the safe communication region. The above is mainly realized by Step (1) to Step (4).
(1) The user terminal A starts measuring after completing the RRC connection.
   The user terminal starts measuring the downlink quality (e.g. the RSRQ and/or the RSRQ).
(2) As shown in Fig. 13, the user terminal A starts moving to the edge of the safe communication region.
(3) After completing the measurement, the user terminal A evaluates the reporting condition according to the measurement report configuration. When the set condition (e.g. the measurement value corresponding to one or two of the RSRP and the RSRQ of the downlink is less than the set threshold value) is satisfied, the user terminal A sends the early warning information.

Fig. 14 is a flowchart of sending the early warning information, including the following steps.

At Step 1401, the user terminal A starts measuring.

At Step 1402, it is determined whether the measurement is completed. If the measurement is completed, Step 1403 is performed. If the measurement is not completed, it returns to Step 1401 to continue the measurement until the measurement is completed.

At Step 1403, the user terminal A determines whether it is needed to send the early warning information. If it is needed to send the early warning information, Step 1404 is performed. If it is not needed to send the early warning information, it returns to Step 1402.

After completing the measurement, the user terminal A evaluates the reporting condition according to the measurement report configuration. For example, it determines whether the set condition (e.g. the measurement value corresponding to one or two of the RSRP and the RSRQ of the downlink in a serving cell of the user terminal A is less than the set threshold value) is satisfied. If so, the user terminal A determines that it is needed to send the early warning information.

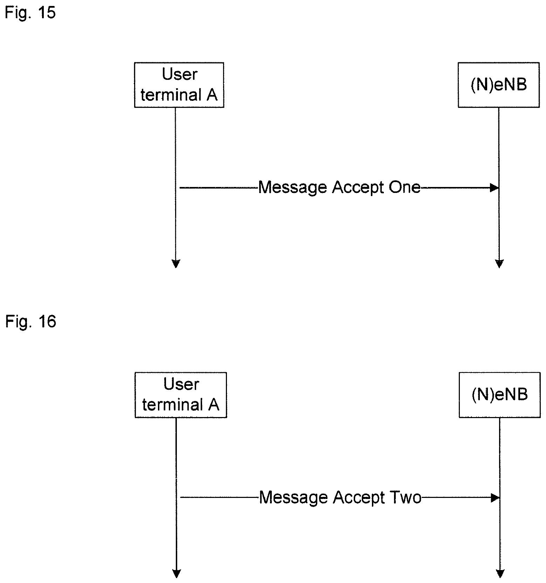

At Step 1404, the user terminal A sends the early warning information.
(4) After determining that it is needed to send the early warning information, the user terminal A triggers vibration or voice alarm "you will leave the service region", and determines whether to move to the IOPS safe communication region. One situation is shown in Fig. 15. If the user does not accept the warning and presses the Leave key of the user terminal A to close the early warning, the user terminal A returns Message Accept One to the NeNB or eNB, so as to inform the NeNB or eNB that it will leave the coverage region. Then, the NeNB or eNB will not schedule resources for the user terminal A anymore and stops serving the user terminal A. The other situation is shown in Fig. 16. If the user accepts the warning and presses the Back key of the user terminal A, the user terminal A returns Message Accept Two to inform the NeNB or eNB that it has received and detects whether to move to the safe communication region (the location may be detected by adopting the GPS positioning service), the NeNB or eNB will continue scheduling resources for the user terminal A and keep serving. After determining to return to the safe communication region according to the location, the user terminal A can trigger to close the early warning.

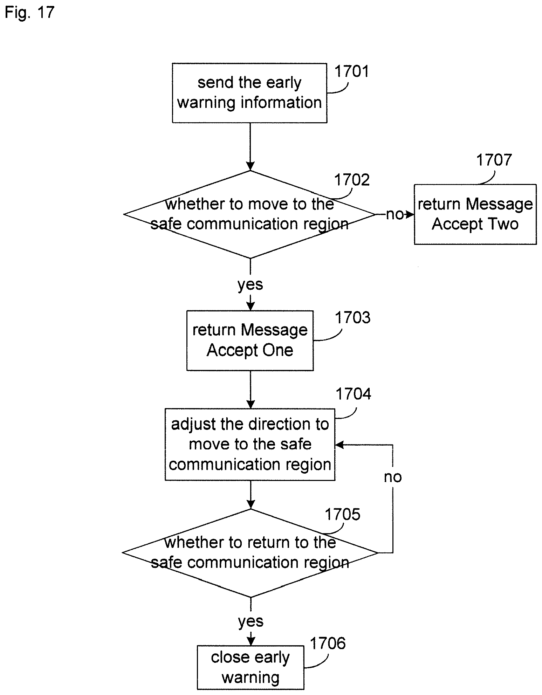

Fig. 17 is a flowchart showing that the user terminal A processes the early warning information, including the following steps.

At Step 1701, the user terminal A sends the early warning information.

The way of sending the early warning information can be vibrating or sending the voice alarm "you will leave the service region".

At Step 1702, it is determined whether to move to the safe communication region. If it is determined to move to the safe communication region, Step 1703 is performed. If it is determined to not move to the safe communication region, Step 1707 is performed.

At Step 1703, if the user accepts the warning and presses the Back key of the user terminal A, the user terminal A returns Message Accept Two to inform the NeNB or eNB that it has received the alarm. Step 1704 is performed.

At Step 1704, the user terminal A indicates the user to adjust the direction to move to the safe communication region.

At Step 1705, the user terminal A (which may adjust the location by adopting the GPS positioning service) determines whether to return to the safe communication region. If the user terminal A is determined to return to the safe communication region, Step 1706 is performed. If the user terminal A is determined to not return to the safe communication region, it returns to Step 1704.

At Step 1706, the user terminal A closes the early warning.

At Step 1707, if the user does not accept the warning and presses the Leave key of the user terminal A to close the early warning, the user terminal A returns the Message Accept One to the NeNB or eNB, so as to inform the NeNB or eNB that it will leave the coverage region of the NeNB or eNB.

It is noted that, after receiving the early warning information, the user terminal A determines whether to move to the safe communication region while sending the early warning information.

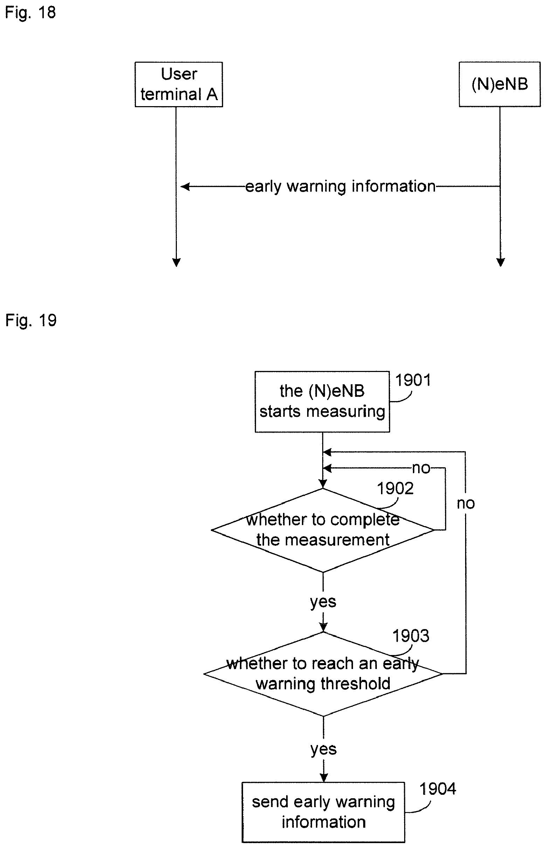

In Mode Three, the NeNB or eNB measures information and feeds back the information to the user terminal, and then the user terminal determines whether to send the early warning information. If necessary, the early warning information is sent to the user terminal, so as to prompt the user to stay in the safe communication region. The above can be realized by Step (1) to Step (2).
(1) As shown in Fig. 18, after the user terminal A completes the RRC connection, the NeNB or eNB starts measuring the uplink quality (e.g. the RSRP and/or the RSRQ of the uplink) for the user terminal A. If the measurement value is less than the set threshold value, the NeNB or eNB sends the early warning information to the user terminal A.

Fig. 19 is a flowchart of sending the early warning information, including the following steps.

At Step 1901, the NeNB or eNB measures the uplink quality for the user terminal A.

At Step 1902, it is detected whether the measurement is completed. If the measurement is completed, Step 1903 is performed. If the measurement is not completed, it returns to Step 1901 until the measurement is completed.

At Step 1903, it is determined, according to the measurement value, whether the early warning threshold is reached. If the early warning threshold is reached, Step 1904 is performed. If the early warning threshold is not reached, it returns to Step 1902.

The NeNB or eNB can determine whether it is needed to send the early warning information to the user terminal A according to whether the measured information (the RSRP and/or the RSRQ of the uplink) is less than the corresponding threshold value. Certainly, the NeNB or eNB can also determine whether the early warning threshold is reached according to its own state information (e.g. whether the capacity reaches the upper limit) and whether the measured information is less than the corresponding threshold. For example, when the capacity of the NeNB or eNB reaches the upper limit, it means that it cannot continue providing services for the user terminal A. If it is determined, according to the measurement report of the user terminal A, that the information (e.g. the RSRP and/or RSRQ) measured by the user terminal A is less than the corresponding threshold, it is determined that the early warning threshold is not reached, and the early warning information is not sent to the user terminal A. When the capacity of the NeNB or eNB does not reach the upper limit, it means that it can continue providing services for the user terminal A. If it is determined, according to the measurement report of the user terminal A, that the information (e.g. the RSRP and/or RSRQ) measured by the user terminal A is less than the corresponding threshold, it is determined that the early warning threshold is reached and it is needed to send the early warning information to the user terminal A.

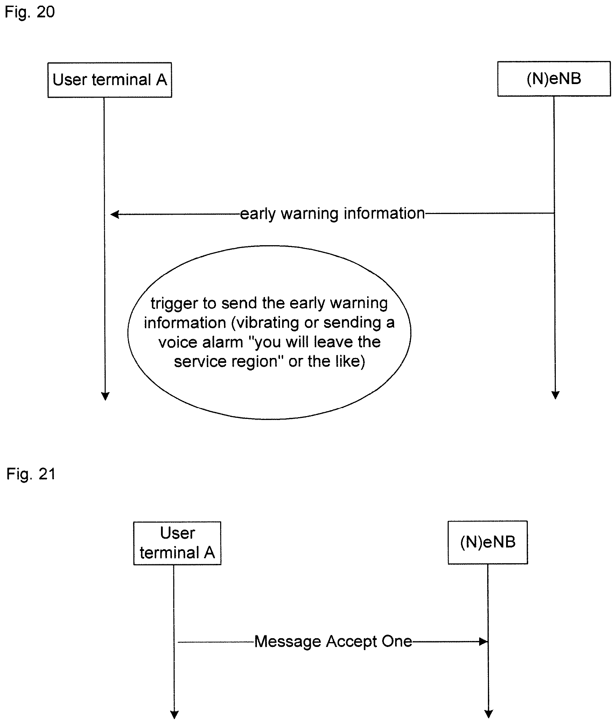

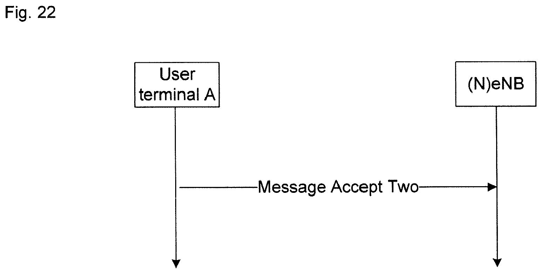

At Step 1904, the early warning information is sent to the user terminal.
(2) As shown in Fig. 20, the user terminal A sends the early warning (for example, the terminal is triggered to vibrate or send the voice alarm "you will leave the service region") after receiving the early warning information, and determines whether to move to the IOPS safe communication region. One situation is shown in Fig. 21. If the user does not accept the warning and presses the Leave key of the user terminal A to close the early warning, the user terminal A returns Message Accept One to the NeNB or eNB, so as to inform the NeNB or eNB that it will leave the safe communication region. Then, the NeNB or eNB will not schedule resources for the user terminal A anymore and stops serving. The other situation is shown in Fig. 22. If the user accepts the warning and presses the Back key of the user terminal A, the user terminal A returns Message Accept Two to inform the NeNB or eNB that it has received the alarm, and prompts the user to adjust the direction to move to the safe communication region (the location may be adjusted by adopting the GPS positioning service). After determining to return to the safe communication region, the user terminal A may be triggered to close the early warning.

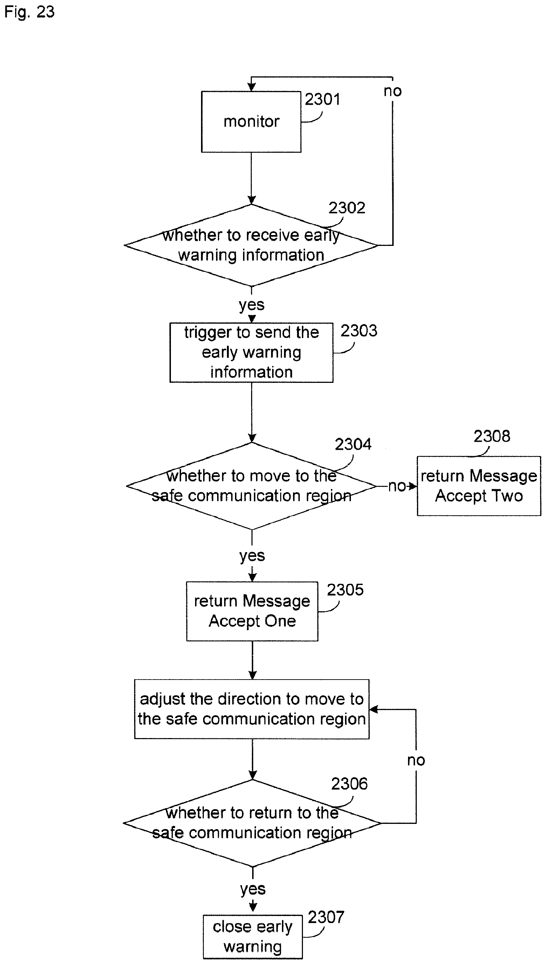

Fig. 23 is a flowchart showing that the user terminal A processes the early warning information, including the following steps.

At Step 2301, the user terminal A monitors the early warning information.

At Step 2302, the user terminal A detects whether the early warning information is received. If the early warning information is received, Step 2303 is performed. If the early warning information is not received, it returns to Step 2301.

At Step 2303, the early warning information is sent.

The way of sending the early warning information can be vibrating or sending the voice alarm "you will leave the service region".

At Step 2304, the user terminal A determines whether to move to the safe communication region. If the user terminal A determines to move to the safe communication region, Step 2305 is performed. If the user terminal A determines to not move to the safe communication region, Step 2308 is performed.

At Step 2305, if the user accepts the alarm and presses the Back key of the user terminal A, the user terminal A returns Message Accept Two to inform the NeNB or eNB that it has received the alarm. Step 2306 is performed.

At Step 2306, the user terminal A indicates the user to adjust the direction to move to the safe communication region.

At Step 2307, the user terminal A (which may adjust the location by adopting the GPS positioning service) determines whether to return to the safe communication region. If the user terminal A determines to return to the safe communication region, the early warning is closed. If the user terminal A determines to not return to the safe communication region, it returns to Step 2306.

At Step 2308, if the user does not accept the alarm and presses the Leave key of the user terminal A to close the early warning, the user terminal A returns the Message Accept One to the NeNB or eNB so as to inform the NeNB or eNB that it will leave the coverage region of the NeNB or eNB.

It is noted that, after receiving the early warning information, the user terminal A determines whether to move to the safe communication region while sending the early warning information.

To sum up, in the IOPS communication scenario, it is determined to send early warning information by means of the measurement information. When the early warning information is sent, it is possible to prompt the user terminal deviating from the safe communication region to adjust the location, thereby preventing the user terminal from deviating from the safe communication region, avoiding communication interruption, and ensuring the stability of communication.

Those skilled in the art may understand that all or part of the steps in the embodiments of method can be performed by hardware related to program instructions. The program may be stored in computer readable storage media. When the program is executed, the steps in the embodiments of method are performed. The storage media include a mobile storage device, a Random Access Memory (RAM), a Read-Only Memory (ROM), a magnetic disk, a compact disk, and other media able to store program codes.

Alternatively, if the integrated units of the disclosure are implemented by software function modules, and sold or used as independent products, they can also be stored in a computer readable storage medium. Based on this understanding, the technical solutions in the embodiments of the disclosure substantially or the part making a contribution to the conventional art can be embodied in the form of software product. The computer software product is stored in a storage medium and includes a number of instructions to make a computer device (which may be a personal computer, a server or a network device, etc.) perform all or part of the method in each embodiment of the disclosure. The above storage media includes a mobile storage device, an RAM, an ROM, a magnetic disk or a compact disc, and other media able to store program codes.

The above is only the specific embodiments of the disclosure and not intended to limit the scope of protection of the disclosure. Any change or replacement that those skilled in the art can think of easily in the scope of technologies disclosed by the disclosure shall fall within the scope of protection of the disclosure. Accordingly, the scope of protection of the disclosure is in accordance with the scope of protection of the claims.

## Claims

1. An early warning method, comprising:
measuring a link between a base station and a user terminal served by the base station; and
determining whether to trigger to send early warning information based on at least obtained measurement information, wherein the early warning information is configured to represent that the user terminal deviates from a safe communication region, and the safe communication region is a region in which link quality exceeds a preset link quality threshold.

2. The method according to claim 1, wherein the measurement information comprises at least one of:
Reference Signal Received Power (RSRP) of an uplink,
Reference Signal Received Quality (RSRQ) of the uplink,
RSRP of a downlink, and
RSRQ of the downlink.

3. The method according to claim 1, wherein determining whether to trigger to send the early warning information based on at least the obtained measurement information comprises:
comparing the obtained measurement information with a measurement information threshold value; and
determining to trigger to send the early warning information when the obtained measurement information is less than the measurement information threshold value; or else, determining to not trigger to send the early warning information.

4. The method according to any one of claims 1 to 3, further comprising:
detecting a location of the user terminal when sending of the early warning information is triggered; and
determining whether the user terminal continues deviating from the safe communication region according to the location of the user terminal; if the user terminal continues deviating from the safe communication region, sending first information, the first information being configured to indicate that the user terminal will deviate from the safe communication region; or else, sending second information, the second information being configured to indicate that the user terminal moves to the safe communication region.

5. An early warning method, comprising:
receiving, by a base station, measurement information sent by a user terminal served by the base station, wherein the measurement information is obtained by the user terminal measuring a link between the user terminal and the base station; and
determining whether to send early warning information to the user terminal based on at least the obtained measurement information, wherein the early warning information is configured to represent that the user terminal deviates from a safe communication region, and the safe communication region is a region in which link quality exceeds a preset link quality threshold.

6. The method according to claim 5, wherein determining whether to trigger to send the early warning information based on at least the obtained measurement information, comprises:
comparing the obtained measurement information with a measurement information threshold value; and
determining to send the early warning information to the user terminal when the obtained measurement information is less than the measurement information threshold value; or else, determining to not send the early warning information to the user terminal.

7. The method according to claim 5, further comprising:
acquiring a location of the user terminal when sending of the early warning information is triggered; and
determining whether the user terminal continues deviating from the safe communication region according to the location of the user terminal; if the user terminal continues deviating from the safe communication region, sending first information, the first information being configured to indicate that the user terminal will deviate from the safe communication region; or else, sending second information, the second information being configured to indicate that the user terminal moves to the safe communication region.

8. The method according to any one of claims 5 to 7, wherein the measurement information sent by the user terminal is measurement information that satisfies a reporting condition to the base station in all the measurement information obtained by the user terminal measuring.

9. An early warning method, comprising:
receiving, by a user terminal, measurement information sent by a base station serving the user terminal, wherein the measurement information is obtained by the base station measuring a link between the base station and the user terminal; and
determining whether to trigger to send early warning information based on the obtained measurement information, wherein the early warning information is configured to represent that the user terminal deviates from a safe communication region, and the safe communication region is a region in which link quality exceeds a preset link quality threshold.

10. The method according to claim 9, wherein determining whether to trigger to send the early warning information based on at least the obtained measurement information comprises:
comparing the obtained measurement information with a measurement information threshold value; and
determining to trigger to send the early warning information when the obtained measurement information is less than the measurement information threshold value; or else, determining to not trigger to send the early warning information.

11. The method according to claim 9 or 10, further comprising:
determining whether the user terminal continues deviating from the safe communication region according to a location of the user terminal when sending of the early warning information is triggered; if the user terminal continues deviating from the safe communication region, sending first information to the base station, the first information being configured to indicate that the user terminal will deviate from the safe communication region; or else, sending second information to the base station, the second information being configured to indicate that the user terminal moves to the safe communication region.

12. An early warning system, comprising:
an early warning unit to send early warning information;
a measuring unit to measure a link between a base station and a user terminal served by the base station, and output measurement information; and
a determining unit to determine whether to trigger the early warning unit to send the early warning information based on at least the measurement information, wherein the early warning information is configured to represent that the user terminal deviates from a safe communication region, and the safe communication region is a region in which link quality exceeds a preset link quality threshold.

13. The system according to claim 12, wherein the measurement information comprises at least one of:
Reference Signal Received Power (RSRP) of an uplink;
Reference Signal Received Quality (RSRQ) of the uplink;
RSRP of a downlink; and
RSRQ of the downlink.

14. The system according to claim 12, wherein the determining unit is further to compare the obtained measurement information with a measurement information threshold value, and determine to trigger to send the early warning information when the obtained measurement information is less than the measurement information threshold value; or else, determine to not trigger to send the early warning information.

15. The system according to claim 12, further comprising:
a detecting unit to detect a location of the user terminal when the determining unit determines to send the early warning information, determine whether the user terminal continues deviating from the safe communication region according to the location of the user terminal, and if the user terminal continues deviating from the safe communication region, send first information, the first information being configured to indicate that the user terminal will deviate from the safe communication region, or else, send second information, the second information being configured to indicate that the user terminal moves to the safe communication region.

16. The system according to any one of claims 12 to 15, wherein,
the measuring unit is further to output measurement information that satisfies a reporting condition to the base station in the measurement information obtained by measuring.

17. A computer storage medium having executable instructions stored therein, the executable instructions being configured to perform the early warning method according to any one of claims 1 to 4.

18. A computer storage medium having executable instructions stored therein, the executable instructions being configured to perform the early warning method according to any one of claims 5 to 8.

19. A computer storage medium having executable instructions stored therein, the executable instructions being configured to perform the early warning method according to any one of claims 9 to 11.
